(19) Europäisches Patentamt

European Patent Office

Office européen des brevets

(11) Veröffentlichungsnummer: **0 178 612**
**B1**

(12) # EUROPÄISCHE PATENTSCHRIFT

(45) Veröffentlichungstag der Patentschrift:
09.12.87

(51) Int. Cl.⁴: **C 08 K 5/09, C 04 B 26/06**

(21) Anmeldenummer: **85112974.2**

(22) Anmeldetag: **12.10.85**

(54) Leichtbauplatten auf Basis von mineralischen Fasern und thermoplastischen Bindemitteln.

(30) Priorität: **19.10.84 DE 3438388**

(43) Veröffentlichungstag der Anmeldung:
**23.04.86 Patentblatt 86/17**

(45) Bekanntmachung des Hinweises auf die Patenterteilung:
**09.12.87 Patentblatt 87/50**

(84) Benannte Vertragsstaaten:
**BE CH DE FR GB IT LI NL SE**

(56) Entgegenhaltungen:
**Keine Entgegenhaltungen.**

(73) Patentinhaber: **BASF Aktiengesellschaft,
Carl-Bosch-Strasse 38, D-6700 Ludwigshafen (DE)**

(72) Erfinder: **Dotzauer, Bernhard, Dr., Woehlerstrasse 12f,
D-6701 Maxdorf (DE)**
Erfinder: **Kast, Hans, Dr., Kantstrasse 1,
D-6800 Mannheim 1 (DE)**
Erfinder: **Beckerle, Wilhelm Friedrich,
Beethovenstrasse 20 1/2, D-6712 Bobenheim-Roxheim
(DE)**
Erfinder: **Hummerich, Rainer, Dr., Grosser Riedweg 17,
D-6520 Worms 27 (DE)**

## Beschreibung

In der Praxis werden im grossen Ausmass Leichtbauplatten z.B. zur Schalldämpfung auf Basis von Mineralfasern, Bindemitteln und zusätzlich meist Füllstoffen, Brandschutzmitteln und Hydrophobierungsmitteln hergestellt. Als Bindemittel dient dabei vorwiegend Stärke, die in Mengen von bis zu etwa 15%, bezogen auf die Mineralfasern, eingesetzt wird. Als Füllstoffe werden meist feinteilige Tone, z.B. Kaolin eingesetzt und als Mineralfasern dienen Steinwolle und/oder Glasfasern, die meist Längen von 5 bis 50 mm und eine Dicke von etwa 1,7 3,3 dtex haben. Der Anteil an Füllstoffen kann dabei in weiten Grenzen variiert werden und liegt häufig im Bereich von 10 bis 30 Gew.%, bezogen auf die Mineralfasern. Schalldämmplatten dieser Art weisen meist eine Dicke von etwa 1 bis 3 cm auf. Ein Nachteil dieser bekannten Leichtbauplatten ist ihre Feuchtigkeitsempfindlichkeit, die meist dazu zwingt, die Rückseiten der Platten z.B. mit Duroplasten, wie wässerigen Melamin/Formaldehyd-Harzen, zu beschichten bzw. zu imprägnieren, wodurch eine weitere Trocknung erforderlich wird. Die Herstellung derartiger Platten ist schon aus diesem Grund verhältnismässig energieaufwendig. Des weiteren führt die Stärke durch Migration zu einer Verfärbung von Dekorbeschichtungen, die üblicherweise auf der Vorderseite der Platten aufgebracht werden.

Gemäss der DDR-Patentschrift 83 315 hat man schon schallabsorbierende Leichtbauplatten hergestellt, indem man mineralische Fasern mit Zement oder Gips sowie einer Polyvinylacetat-Dispersion unter Zusatz einer Bitumenemulsion gebunden hat. Ein Zusatz von Bitumenemulsion ist dabei im Hinblick auf ein Verhindern von Ausblühungen erforderlich, führt aber zu Verfärbungen und die erhaltenen Produkte zeigen vergleichsweise hohe Raumgewichte, niedrige Festigkeiten und geringe Formstabilität in der Wärme.

Nach dem Verfahren der US-A-3 779 862 werden flexible Mineralfaser-Platten hergestellt, indem man bei der Herstellung der wässerigen Aufschlämmung der Mineralfasern eine wässerige Dispersion eines anionischen, selbstvernetzenden Polyacrylats sowie eine Aluminiumhydroxid-Suspension und einen synthetischen anionischen Polyelektrolyten zusetzt, wonach die Platten unter Entwässerung gebildet werden. Bei diesem etwas umständlichen Verfahren erhält man jedoch Platten, die nicht selbsttragend und nicht feuchtigkeitsfest sind.

Schliesslich ist es aus der DE-PS 25 45 728 bekannt, Dämmplatten herzustellen, indem man Perlit und Steinwolle mit einer Polymerdispersion auf Basis eines Copolymerisates aus Butylacrylat, Acrylnitril und Acrylsäure unter Zusatz eines Faseraufschlussmittels auf Basis einer wässerigen Lösung eines carboxylgruppenhaltigen Polyacrylesters bindet. Dabei erhält man jedoch Dämmplatten, die zwar eine sehr gute Wärmedämmung ergeben, deren Druckfestigkeit und Biegezugfestigkeit jedoch zu wünschen übriglassen. Aufgrund der in Beispiel 1 der DE-OS 25 45 728 angegebenen Biegefestigkeit der Dämmplatte ergibt sich, dass als Bindemittel ein Copolymerisat eingesetzt wurde, dessen Glastemperatur unter −20° C liegt.

Es wurde nun gefunden, dass Leichtbauplatten auf Basis von mineralischen Fasern und thermoplastischen Bindemitteln, die ggf. zusätzlich Füllstoffe, Brandschutzmittel, Hydrophobierungsmittel und als Bindemittel 4 bis 20%, bezogen auf das Gewicht der mineralischen Fasern, an Polymerisaten eines Glastemperaturbereichs von 60 bis 110° C aus 60 bis 100 Gew.%, bezogen auf das Copolymerisat, 1 bis 4 C-Atome im Alkoholrest aufweisenden (Meth)acrylaten und 0 bis 40 Gew.% (Meth)Acrylnitril und/oder Styrol enthalten, besonders vorteilhafte Eigenschaften haben, wenn sie einen zusätzlichen Gehalt an 12 bis 36 C-Atome enthaltenden carbonsauren Salzen mehrwertiger Metalle aufweisen. Derartige Leichtbauplatten haben schalldämpfende Eigenschaften und können in an sich üblicher Weise, insbesondere durch Behandeln von Mineralfasern mit einer anionischen Dispersion eines Polymerisates eines Glastemperaturbereiches von 60 bis 110° C aus 1 bis 4 C-Atome im Alkoholrest aufweisenden (Meth)acrylaten und 0 bis 40 Gew.% (Meth)Acrylnitril und/oder Styrol und einem Fällungsmittel in wässeriger Suspension, Abtrennen der wässerigen Phase unter Blattbildung und Trocknen hergestellt werden. Die Leichtbauplatten enthalten die hierfür üblichen Mineralfasern, z.B. Steinwolle, Basaltwolle und/oder Glasfasern mit Faserlängen von meist 0,2 bis 8, insbesondere von 0,5 bis 5 cm und Dicken von etwa 1,7 bis 3,3 dtex. Derartige Mineralfasern werden bei der Herstellung der Platten oft in geschlichtetem Zustand eingesetzt, und als Schlichtemittel für derartige Mineralfasern werden üblicherweise Mineralöle, synthetische Polymere, wie besonders Polyacrylat-Dispersionen sowie Polyacrylsäuren verwendet.

Die thermoplastischen Bindemittel, d.h. die Polymerisate eines Glastemperaturbereichs von 60 bis 110, vorzugsweise von 60 bis 95° C, aus 60 bis 100, insbesondere 60 bis 80 Gew.-%, bezogen auf das Polymerisat, 1 bis 4 C-Atome im Alkoholrest aufweisenden Methacrylsäureestern und/oder Acrylsäureestern und 0 bis 40, insbesondere 20 bis 40, vorzugsweise 30 bis 40 Gew.% Acrylnitril und/oder Methacrylnitril und/oder Styrol, insbesondere aber Acrylnitril, sind in den Leichtbauplatten in einer Menge von 4 bis 20, vorzugsweise von 6 bis 15, insbesondere von 8 bis 12 Gew.%, bezogen auf das Gewicht der Mineralfasern, enthalten. Sie leiten sich z.B. von Methylmethacrylat, Ethylacrylat und -methacrylat, n-Butyl-methacrylat, tert.-Butylacrylat und -methacrylat sowie ferner von gegebenenfalls bis zu 25 Gew.% n-Butylacrylat und Methylacrylat ab. Die polymeren Bindemittel können zusätzlich Acryl- und/oder Methacrylsäure und/oder Acryl- und/oder Methacrylamid in Mengen von bis 5 Gew.%, bezogen auf das Polymerisat, einpolymerisiert enthalten. In manchen Fällen ist es von Vorteil, wenn die Bindemittelpolymerisate vernetzend wirkende Monomere in geringen Mengen, z.B. in Mengen von vorzugsweise 2 bis 5% ihres Gewichtes, einpolymerisiert enthalten. Beispiele hierfür sind vor allem N-Methylolacryl- und -methacrylamid und deren $C_1$-$C_4$-Ether, wie N-Methoxy-, N-n-Butoxy- und N-Ethoxy-N-methyl-acryl- und -methacrylamid. Im allgemeinen werden sie bei der Herstellung der Leichtbauplatten in Form ihrer wässerigen anionischen Dispersion eingesetzt, die in üblicher Weise unter Verwendung von üblichen Mengen an wasserlöslichen Salzen von 12 bis 36 C-Atome, insbesondere 15 bis 22 C-Atome, enthaltenden Carbonsäuren, insbesondere von deren Kalium-, Natrium- oder Ammoniumsalzen als Emulgatoren unter Verwendung der üblichen Mengen der üblichen radikalbildenden Polymerisationsinitiatoren durch Emulsionspolymerisation hergestellt sind. Als Emulgatoren seien hier die Natrium- und Kaliumsalze von gesättigten bzw. ungesättigten Fettsäuren, wie z.B. der Palmitin-, Stearin- und Öl-säure hervorgehoben. In Frage kommen ferner auch Salze dimerisierter Fettsäuren mit z.B. 24 bis 36 C-Atomen.

Polymerisat-Dispersionen dieser Art sind im Handel erhältlich. Sie liegen meist in Form von 40 bis 70%igen wässerigen Dispersionen vor.

Bei der Herstellung der schalldämmenden und wärmeisolierenden Leichtbauplatten unter Aufschlämmung der Mineralfasern und Zugabe von Bindemitteln zu der wässerigen Mineralfaser-Suspension können die Poly-(meth)acrylat-Dispersionen der genannten Art als solche zu der Suspension zugesetzt werden. Durch Fällungsmittel wird dann das Bindemittel-Polymerisat auf den Fasern niedergeschlagen und bindet diese anschliessend an die übliche Blattbildung, z.B. auf Sieben unter Abtrennung der wässerigen Phase. Das Trocknen wird anschliessend an die Blattbildung bei erhöhter Temperatur, die meist zwischen 110 und 220, vorzugsweise zwischen 140 und 180° C liegt, vorgenommen, wobei z.B. Infrarotstrahler oder Heissluft bzw. Mikrowellen zur Trocknung eingesetzt werden können.

Bei der Herstellung der Leichtbauplatten aus einer wässerigen Suspension der Mineralfasern können als Fällungsmittel mit Vorteil kationische Polymer-Dispersionen eingesetzt werden. Derartige Polymer-Dispersionen enthalten übliche kationische und ggf. zusätzlich übliche nichtionische Emulgatoren, z.B. alkoxylierte Alkylphenole oder alkoxylierte Fettalkohole oder alkoxylierte Säuren in üblichen Mengen von etwa 0,1 bis 2,0 Gew.%, bezogen auf das Polymerisat. Auch derartige kationische Polymer-Dispersionen sind im Handel erhältlich. Schliesslich können als Fällungsmittel auch vorteilhaft Salze mehrwertiger Metalle, besonders Aluminiumsalze, wie vor allem Aluminiumsulfat, eingesetzt werden, wobei deren Menge meist 0,5 bis 15, vorzugsweise 2 bis 8 Gew.%, bezogen auf das in der anionischen Poly(meth)acrylat-Dispersion enthaltene Poly-(meth)acrylat, beträgt.

Die übliche Verwendung von handelsüblichen Flockungshilfsmitteln, wie Polyacrylamid, zur Flockung feinteiliger Anteile der anorganischen Zuschlagstoffe ist oft vorteilhaft, weil man dadurch zu klaren Filtraten gelangt.

Die fertig getrockneten Platten haben im allgemeinen eine Dicke von 0,5 bis 10, oft von 1 bis 5 und meist von 1 bis 3, vorzugsweise von 1 bis 2 cm. Sie enthalten meist Füllstoffe, wie feinteilige Tone, z.B. Kaolin und Montmorillonit, Feldspat, Kreide, Kieselgur und/oder Glimmer, deren Menge bis 30%, bezogen auf die Mineralfasern, vorzugsweise 10 bis 20 Gew.% betragen kann.

Zusätzlich können die Leichtbauplatten, die im allgemeinen ein sehr günstiges Brandverhalten aufweisen, noch bis zu 10, vorzugsweise 1 bis 3 Gew.%, bezogen auf die Mineralfasern üblicher Brandschutzmittel, z.B. Aluminiumsilikate und -hydroxide, Borate, wie Borax und/oder Phosphate, wie prim. Natriumphosphat enthalten. Schliesslich kann es in manchen Fällen bei der Herstellung der Leichtbauplatten von Vorteil sein, noch bis zu 5, oft reichen 1 bis 2 Gew.%, bezogen auf die Mineralfasern an zusätzlichen Hydrophobierungsmitteln, wie Silikone (Polysiloxane) und Wachse zuzufügen.

Die neuen Leichtbauplatten können auf ihrer Sichtfläche z.B. mit den üblichen Schall-absorbierenden Strukturen versehen und in an sich üblicher Weise beschichtet sein. Hierfür geeignete Massen sind im Handel erhältlich. Derartige Beschichtungen auf Basis handelsüblicher, wässeriger Polymerdispersionen können auch in üblicher Weise gefärbt sein.

Die neuen Leichtbauplatten zeichnen sich durch geringe Wasseraufnahme und nach entsprechender Oberflächenbehandlung durch hervorragendes Schalldämmverhalten aus, sind steif und biegen auch in feuchtwarmer Atmosphäre (Tropen) oder in nassem Zustand nicht durch. Sie sind schwer entflammbar und gegen einmal aufgenommenes Wasser ohne Verlust ihrer funktionellen Eigenschaften besonders leicht wieder ab. Überraschenderweise können die neuen Leichtbauplatten gemäss dem neuen Herstellungsverfahren in besonders energiesparender Weise hergestellt werden, da dabei das Wasser wesentlich leichter aus den verfestigten Platten durch Verdampfen beim Trocknen abgeführt werden kann, als wenn als Bindemittel Stärke eingesetzt wird. Von Vorteil bei den neuen Herstellungsverfahren ist auch, dass das Abwasser praktisch nicht durch Schadstoffe belastet wird. Die Platten sind leicht mechanisch bearbeitbar und verrottungsbeständig.

Die in den folgenden Beispielen angegebenen Teile und Prozente beziehen sich, wenn nicht anders angegeben, auf das Gewicht. Volumenteile verhalten sich zu den (Gewichts)teilen wie das Liter zum Kilogramm. Die darin verwendete Mineralwolle besteht aus Fasern einer durchschnittlichen Länge von 3 cm und eines Durchmessers von unter 3,3 dtex.

*Beispiele 1 bis 4*

Man gibt jeweils zu einer Suspension von 230 Teilen Steinwolle und 85 Teilen Ton in 8000 Teilen Wasser, die in der folgenden Tabelle angegebenen Teile der anionischen Dispersionen der Bindemittel-Polymerisate sowie 10%ige wässerige Alaunlösung und flockt dann unter Zugabe von ca. 1 Teil 0,1%ige wässeriger Polyacrylamidlösung (Flockungsmittel) aus. Nach gründlichem Verteilen der Suspension gibt man die Masse bei Unterdruck auf ein Sieb und unterstützt das Entwässern durch leichtes Pressen (weniger als $10^4$ Pa). Der Auftrag erfolgt in einer Dicke (nach dem Pressen) von 15 mm. Man trocknet anschliessend etwa 18 Minuten in einem Mikrowellenofen und erhält Leichtbauplatten, deren Dichte, Wasseraufnahme, Formbeständigkeit und Bruchfestigkeit in der folgenden Tabelle zusammengestellt sind. In dieser Tabelle ist i-BA = iso-Butylacrylat, nBA = n-Butylacrylat, t.BA = tert.Butylacrylat, AN = Acrylnitril, MAN = Methacrylnitril, MAS = Methacrylsäure, MMA = Methylmethacrylat, MA = Methylacrylat, MAMOL = N-Methylolmethacrylamid.

Wasseraufnahme, Formbeständigkeit und Bruchfestigkeit in feuchtwarmer Atmosphäre wurden wie folgt bestimmt:

(a) *Wasseraufnahme*

Streifen von 25 × 4 × 1,5 cm werden anschliessend an die Herstellung der Leichtbauplatte, mindestens 24 Stunden unter Normklima (23° C/65% rel. Luftfeuchte) gelagert. Dann werden sie vollständig in Wasser getaucht und nach der in der Tabelle angegebenen Zeit und oberflächlicher Trocknung mit Filterpapier von Wassertropfen gewogen. Die in der Tabelle angegebenen Werte sind Mittelwerte aus jeweils 3 Messungen.

(b) *Formbeständigkeit*

Streifen von 25 × 4 × 1,5 cm werden frühestens 24 Stunden nach der Herstellung der Leichtbauplatte im Klimaraum (39° C, 90 rel. Luftfeuchte) flachseitig nahe der Endkanten waagrecht aufgelegt und in der Mitte mit einem 1 kg-Gewicht belastet, so dass sich die Belastung auf die Gesamtlänge des Prüfkörpers auswirkt. Die Durchbiegung des Prüfkörpers wird im entlasteten Zustand gemessen und so ein Anhaltspunkt für das Langzeitverhalten der Leichtbauplatten ermitteln. Die in der Tabelle angegebenen Werte sind Mittelwerte aus 3 Parallelmessungen.

(c) *Bruchfestigkeit*

Wird im Biegeversuch nach DIN 53 423 ermittelt, wobei die Kraft bei Bruch der 25 cm langen, 4 cm breiten und 1,5 cm dicken Prüfkörper erfasst wird. Die Angaben in der Tabelle sind Mitteilungen von jeweils 5 Einzelmessungen.

| Beispiel | X Disp. (Teile) | % Gehalt (Dispersion) | Bindemittel Polymerisat | Bindemittel % Emulgator (bez. auf Polymer) | Fällungsmittel Alaunlösung (10%ig) (Vol.-Teile) | Tg (°C) | Dichte ($g/cm^3$) | $H_2O$-Aufnahme % nach 1 Std. | $H_2O$-Aufnahme % nach 2 Std. | Formbeständigkeit (mm) nach ... Std. | | Bruchfestigkeit (N) |
|---|---|---|---|---|---|---|---|---|---|---|---|---|
| 1 | 62 | 40 | 25 MAN 20 MA/50 MMA 4 MAmol, 1 MAS | 1,5 Palmitins. Na | 53 | 78 | 0,37 | 3,5 | 4,7 | 1/48 | 1,5/96 | 48 |
| 2 | 31 | 60 | 40 AN/ 40 MMA 20 MA | 2,1 Stearins. $NH_4$ | 48 | 80 | 0,41 | 4,8 | 6,0 | 0/48 | 0,5/120 | 55 |
| 3 | 84 | 38,5 | 30 AN 40 MMA 10 t-BA 20 MA | 2,9 Öls. Na | 95 | 74 | 0,45 | 3,4 | 5,1 | 0/48 | 0/96 | 63 |
| 4 | 43 | 48 | 35 AN 60 MMA 15 t-BA | 1,4 Öls. Na | 36 | 91 | 0,35 | 3,0 | 4,2 | 0/48 | 0/120 | 62 |

*Eigenschaften der Leichtbauplatten*

## Patentansprüche

1. Leichtbauplatten auf Basis von mineralischen Fasern und thermoplastischen Bindemitteln, die gegebenenfalls zusätzlich Füllstoffe, Brandschutzmittel, Hydrophobierungsmittel und als Bindemittel 4 bis 20%, bezogen auf das Gewicht der mineralischen Fasern, an Polymerisaten eines Glastemperaturbereiches von 60 bis 110° C aus 60 bis 100 Gew.%, bezogen auf das Copolymerisat, 1 bis 4 C-Atome im Alkoholrest aufweisenden (Meth)acrylaten und 0 bis 40 Gew.% (Meth)Acrylnitril und/oder Styrol enthalten, *gekennzeichnet durch* einen zusätzlichen Gehalt an 12 bis 36 C-Atome enthaltenden carbonsauren Salzen mehrwertiger Metalle.

2. Verfahren zur Herstellung von Leichtbauplatten durch Behandeln von Mineralfasern mit einer anionischen Dispersion eines Polymerisates eines Glastemperaturbereiches von 60 bis 110° C aus 1 bis 4 C-Atome aufweisenden (Meth)acrylaten und ggf. bis 40% seines Gewichts (Meth)-acrylnitril und/oder Styrol und einem Fällungsmittel in wässeriger Suspension, Abtrennen der wässerigen Phase unter Blattbildung und Trocknen, *dadurch gekennzeichnet,* dass die Poly(meth)-acrylat-Dispersion als Emulgator wasserlösliche Salze 12 bis 36 C-Atome enthaltender Carbonsäuren enthält.

3. Verfahren nach Anspruch 2, *dadurch gekennzeichnet,* dass man als Fällungsmittel eine kationische Polymerdispersion einsetzt.

4. Verfahren nach Anspruch 2, *dadurch gekennzeichnet,* dass man als Fällungsmittel Aluminiumsalze einsetzt.

## Claims

1. A light-weight building board which is based on mineral fibers and a thermoplastic binder, may furthermore contain fillers, fireproofing agents and water repellents and contains, as the binder, from 4 to 20%, based on the weight of the mineral fibers, of a polymer having a glass transition temperature of from 60 to 110° C and consisting of from 60 to 100% by weight, based on the copolymer, of (meth)acrylates of alcohols of 1 to 4 carbon atoms and from 0 to 40% by weight of (meth)acrylonitrile and/or styrene, which board additionally contains a salt of a carboxylic acid of 12 to 36 carbon atoms with a polyvalent metal.

2. A process for the production of a light-weight building board by treating mineral fibers with an anionic dispersion of a polymer, having a glass transition temperature of from 60 to 100° C and consisting of (meth)acrylates of 1 to 4 carbon atoms and, if required, not more than 40%, based on the weight of the polymer, of (meth)acrylonitrile and/or styrene, and a precipitating agent in aqueous suspension, separating off the aqueous phase with sheet formation and drying the sheets, wherein the poly(meth)acrylate dispersion contains a water-soluble salt of a carboxylic acid of 12 to 36 carbon atoms as an emulsifier.

3. A process as claimed in claim 2, wherein the precipitating agent used is a cationic polymer dispersion.

4. A process as claimed in claim 2, wherein the precipitating agent used is an aluminium salt.

## Revendications

1. Eléments de construction légers à base de fibres minérales et de résines de liaison thermoplastiques, contenant en outre éventuellement des charges, des produits ignifuges, des produits hydrophobes et, comme résines de liaison, de 4 à 20%, par rapport au poids des fibres minérales, de polymères ayant un domaine de températures de transition vitreuse de 60 à 110° C et contenant de 60 à 100%, par rapport au poids de copolymère, de (méth)acrylates ayant de 1 à 4 atomes de carbone dans le reste alcool et de 0 à 40% en poids de (méth)acrylonitrile et/ou de styrène, caractérisés par une teneur accrue en sels carboxyliques contenant de 12 à 36 atomes de carbone de métaux multivalents.

2. Procédé de fabrication d'éléments de construction légers par traitement de fibres minérales par une dispersion anionique d'un polymérisat ayant un domaine de températures de transition vitreuse de 60° à 110° C et contenant des (méth)-acrylates ayant de 1 à 4 atomes de carbone dans le reste alcool et jusqu'à 40% de son poids de (méth)acrylonitrile et/ou de styrène et par un agent de précipitation en suspension aqueuse, séparation de la phase aqueuse par formation de feuilles et séchage, caractérisé en ce que la dispersion de poly(méth)acrylate contient comme émulsifiant des sels hydrosolubles d'acides carboxyliques ayant de 12 à 36 atomes de carbone.

3. Procédé selon la revendication 2, caractérisé en ce qu'on utilise comme agent de précipitation une dispersion cationique de polymères.

4. Procédé selon la revendication 2, caractérisé en ce qu'on utilise comme agent de précipitation des sels d'aluminium.